(19) **Europäisches Patentamt / European Patent Office / Office européen des brevets**

(11) **EP 3 373 509 B1**

(12) **FASCICULE DE BREVET EUROPEEN**

(45) Date de publication et mention
de la délivrance du brevet:
**23.12.2020 Bulletin 2020/52**

(51) Int Cl.:
***H04L 9/30*** *(2006.01)*     ***H04L 9/32*** *(2006.01)*

(21) Numéro de dépôt: **18160420.8**

(22) Date de dépôt: **07.03.2018**

(54) **PROCÉDÉ DE SIGNATURE ÉLECTRONIQUE D'UN DOCUMENT AVEC UNE CLÉ SECRÈTE PRÉDÉTERMINÉE**

VERFAHREN ZUR ERZEUGUNG EINER ELEKTRONISCHEN UNTERSCHRIFT EINES DOKUMENTS MIT EINEM VORBESTIMMTEN GEHEIMSCHLÜSSEL

METHOD FOR ELECTRONICALLY SIGNING A DOCUMENT WITH A PREDETERMINED SECRET KEY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2017 FR 1751894**

(43) Date de publication de la demande:
**12.09.2018 Bulletin 2018/37**

(73) Titulaire: **Idemia Identity & Security France
92400 Courbevoie (FR)**

(72) Inventeurs:
- **CHABANNE, Herve
92130 Issy Les Moulineaux (FR)**
- **PROUFF, Emmanuel
92130 Issy Les Moulineaux (FR)**

(74) Mandataire: **Regimbeau
87 rue de Sèze
69477 Lyon Cedex 06 (FR)**

(56) Documents cités:
**EP-A1- 3 059 894    WO-A1-2009/136361**

- **Jung Yeon Hwang ET AL: "Digital Signature Schemes with Restriction on Signing Capability" In: "Network and Parallel Computing", 1 janvier 2003 (2003-01-01), Springer International Publishing, Cham 032548, XP055424426, ISSN: 0302-9743 ISBN: 978-3-642-24784-2 vol. 2727, pages 324-335, DOI: 10.1007/3-540-45067-X_28, * section 5.2 ***

## Description

DOMAINE TECHNIQUE GENERAL

La présente invention concerne le domaine de la cryptographie, et en particulier un procédé de signature de type « boite blanche ».

ETAT DE L'ART

Une fonction est considérée comme une « boîte noire » lorsqu'on ne peut pas accéder à son fonctionnement interne, i.e. qu'on peut connaître ses entrées et ses sorties mais pas ses paramètres secrets ou ses états intermédiaire.

Les algorithmes cryptographiques (par exemple pour du chiffrement ou de la signature) sont ainsi classiquement supposés des boites noires lorsqu'on évalue leur fiabilité (résistance aux attaques).

L'hypothèse de boite noire impose une contrainte forte sur le stockage et la manipulation de ces paramètres. Cependant des outils ont été récemment publiés pour permettre l'automatisation d'attaques sur implémentation matérielle, attaques dites par canaux auxiliaires ou par fautes.

Aujourd'hui, pour de nombreux cas d'usages incluant le paiement sur mobile, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.

La cryptographie dite boite blanche vise à répondre à ce défi en proposant des implémentations des algorithmes cryptographiques qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense. On parle alors « d'implémentation blanchie » d'un calcul élémentaire de l'algorithme lorsqu'on arrive à représenter ce calcul sous une forme sécurisée évitant d'avoir les clés utilisées en clair, par exemple en représentant le calcul par une table stockée en mémoire.

Il a par exemple été proposé dans la demande US2016/328543 une méthode visant à cacher les entrées et les sorties d'une fonction d'exponentiation modulaire, ce qui permet d'améliorer la sécurité d'algorithmes cryptographiques tels que RSA (« Rivest, Shamir, Adleman »).

Toutefois, il a été montré que cette méthode n'était pas suffisante pour assurer une protection satisfaisante de l'algorithme de signature DSA (« Digital Signature Algorithm »).

Le calcul d'une signature DSA présuppose qu'une clef publique $(p,q,g,y)$ et une clef privée $x$ ont été associées à l'utilisateur. Le procédé de génération de ces clefs se compose des différentes étapes suivantes :

- Choisir un nombre premier $p$ de longueur $L$ telle que $512 \leq L \leq 1024$, et $L$ est divisible par 64
- Choisir un nombre premier $q$ de 160 bits, de telle façon que $p - 1 = qc$, avec $c$ un entier
- Choisir $h$, avec $1 < h < p - 1$ de manière à construire $g$ tel que $g = h^c \bmod p > 1$
- Générer aléatoirement un $x$, avec $0 < x < q$
- Calculer $y = g^x \bmod p$

La signature DSA d'un message $m$ commence par un calcul de haché $H(m)$ (à l'aide d'une fonction de hachage standard comme le SHA256) puis se poursuit par le calcul de deux valeurs $s_1$ et $s_2$ telles que :

- 

$$s_1 = (g^k \bmod p) \bmod q$$

- 

$$s_2 = (H(m) + s_1 x)k^{-1} \bmod q$$

où $k$ est une donnée appelée nonce (i.e. un nombre arbitraire, c'est-à-dire un aléa, à usage unique, de l'anglais « number used once »), qui doit être tirée aléatoirement pour chaque nouvelle signature.

La signature est $(s_1,s_2)$.

L'article de Jung Yeon Hwang ET AL: "Digital Signature Schemes with Restriction on Signing Capability "In: "Network and Parallel Computing", 1 janvier 2003 (2003-01-01), ISSN: 0302-9743, ISBN: 978-3-642-24784-2, vol. 2727, pages 324-335, DOI: 10.1007/3-540-45067-X_28, divulguent un procédé de signature avec des éléments précalculés de manière à assurer que le nonce n'est pas réutilisé tout en limitant le nombre de signatures possibles.

Comme expliqué, on peut obtenir des implémentations blanchies de chacune des fonctions de calcul des états internes $s_1$ et $s_2$ en cachant l'exponentiation modulaire.

Toutefois, la même application de l'implémentation blanchie de $s_2$ à deux données $z$ et $z'$ différentes (par exemple les condensats de deux messages différents) tout en forçant la réutilisation d'un même nonce $k$ (ce qui est normalement impossible sauf dans une attaque boite blanche ou l'on aurait accès au matériel) permet par calcul de $s_2(z) - s_2(z')$ de remonter à $x$. On appelle cela une « restart attack ».

Il serait par conséquent souhaitable de disposer d'une nouvelle solution de signature « boite blanche » utilisant le mécanisme standard tel que DSA qui soit complètement résistante à toutes attaques connues.

## PRESENTATION DE L'INVENTION

Selon un premier aspect, la présente invention concerne un procédé de signature électronique d'un document avec une clé secrète prédéterminée, le procédé étant caractérisé en ce qu'il comprend la mise en œuvre par des moyens de traitement de données d'un équipement d'étapes de :

(a) Tirage d'un couple d'un premier état interne et d'une implémentation blanchie d'une opération d'arithmétique modulaire parmi un ensemble de couples prédéterminés chacun pour un nonce, ledit ensemble de couples étant stocké sur des moyens de stockage de données de l'équipement, ledit premier état interne étant fonction du nonce et ladite opération d'arithmétique modulaire étant fonction du premier état interne, du nonce et de la clé secrète ;

(b) Détermination d'un deuxième état interne par application à un condensat du document obtenu par une fonction de hachage donnée, de ladite implémentation blanchie tirée ;

(c) génération d'une signature électronique du document à partir du premier état interne du couple tiré et du deuxième état interne déterminé, et suppression du couple tiré dudit ensemble de couples.

Selon d'autres caractéristiques avantageuses et non limitatives :

- ladite opération d'arithmétique modulaire est $z \mapsto \left(z + s_1^i x\right) k_i^{-1} \; mod \; q$, où $s_1^i$ est le premier état interne, $k_i$ le nonce, $x$ la clé secrète et $q$ une constante ;
- $s_1^i = \left(g^{k_i} \; mod \; p\right) mod \; q$, où $g$ et $p$ sont des constantes ;
- la signature est le couple $\left(s_1^i, s_2^i\right)$ des premier et deuxième états internes ;
- le procédé comprend une étape préalable (a0) de génération dudit ensemble de couples par des moyens de traitement de données d'un serveur, et sa transmission à l'équipement ;
- l'étape (a0) comprend la génération d'une pluralité de nonces, puis la génération du couple pour chaque nonce ;
- l'étape (a0) comprend la génération préalable des constantes $p, q, g$ conformément à l'algorithme DSA ;
- l'étape (a0) comprend également la génération préalable de la clé secrète et d'une clé publique associée en fonction des constantes $p, q, g$ ;
- lesdites implémentations blanchies utilisent un Système de Représentation Modulaire, RNS, pour effectuer ladite opération d'arithmétique modulaire ;
- le procédé comprend une étape subséquente (d) d'association par les moyens de traitement de données de l'équipement de la signature électronique générée au document de sorte à former le document signé

Selon un deuxième et un troisième aspect, l'invention propose un produit programme d'ordinateur comprenant des instructions de code pour l'exécution d'un procédé selon le premier aspect de signature électronique d'un document avec une clé secrète prédéterminée ; et un moyen de stockage lisible par un équipement informatique sur lequel un produit programme d'ordinateur comprend des instructions de code pour l'exécution d'un procédé selon le premier aspect de signature électronique d'un document avec une clé secrète prédéterminée.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

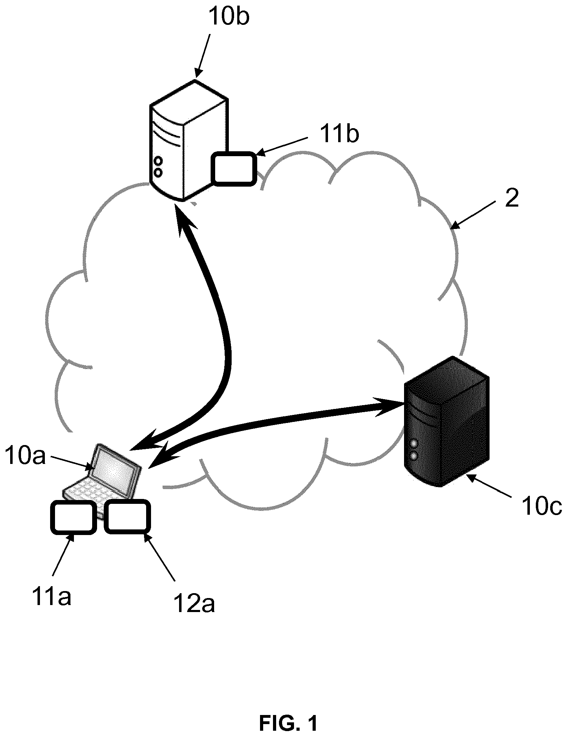

- la figure 1 est un schéma d'une architecture pour la mise en œuvre du procédé selon l'invention.

## DESCRIPTION DETAILLEE

*Architecture*

En référence à la **figure 1**, est proposé un procédé de signature « boite blanche » d'un document mis en œuvre au sein d'un équipement 10a tel qu'un terminal mobile (smartphone, tablette tactile, etc.), i.e. un équipement ne disposant pas particulièrement d'un matériel sécurisé et qui peut faire l'objet d'attaques sur implémentation matérielle, et pour lequel l'approche boite blanche prend tout son intérêt.

L'équipement 10a comprend des moyens de traitement de données 11a (un processeur) et des moyens de stockage de données 12a (une mémoire, par exemple flash).

L'équipement 10a est par exemple relié à un serveur 10b par exemple via le réseau internet 20. Il peut être amené à recevoir depuis ce serveur 10b (par exemple celui d'un fournisseur de solutions de sécurité) des objets cryptographiques (qu'on décrira plus loin) contenant des secrets qui vont être stockées dans la mémoire 12a et utilisées pour la mise en œuvre du présent procédé

L'équipement 10a peut lui-même être connecté à d'autres serveurs 10c de tiers auxquels il pourra transmettre le document signé une fois qu'il aura généré la signature électronique.

*Procédé de signature*

Le présent procédé est bien un procédé de « génération de signature électronique de document », et non « de signature d'un document ». Cela signifie qu'il permet seulement d'obtenir la signature électronique du document et pas encore le « document signé », i.e. l'association du document original et de la signature, généralement dans un conteneur quelconque.

Par « signature électronique » d'un document, on entend la définition classique de ce terme, à savoir une primitive cryptographique permettant d'identifier le signataire et garantissant que le document n'a pas été altéré depuis l'instant où la signature a été produite et est bien le document original (dans la suite de la présente description, on désignera comme « original » le document dont est réellement issu le condensat). Cet objet cryptographique consiste généralement en un chiffré du condensat du document grâce à une fonction de chiffrement asymétrique : le signataire utilise une clé privé, et tout le monde peut vérifier la signature grâce à une clé publique (en comparant le condensat contenu dans la signature et un condensat recalculé).

On comprendra que le présent procédé est une nouvelle implémentation d'algorithmes connus utilisant des opérations d'arithmétique modulaire (i.e. des opérations comprenant des calculs de modulo, notamment des exponentiations modulaires), en particulier DSA qui est un standard actuel et dont on prendra l'exemple dans la suite de la description. Plus précisément, il ne propose pas une nouvelle stratégie de signature, mais seulement une nouvelle façon de manipuler les données au sein de l'algorithme qui soit résistante à toutes les attaques matérielles en « boite blanche ».

Le document est associé à un condensat obtenu par une fonction de hachage donnée.

Comme expliqué, une fonction de hachage prend en entrée un message de taille arbitraire (le document original) et produit un condensat de taille fixe associé à ce message. Ici, ladite fonction de hachage donnée est avantageusement une fonction dite cryptographique, c'est-à-dire avec des propriétés supplémentaires : le condensat est statistiquement bien réparti dans l'ensemble des valeurs d'arrivées, il est impossible en temps raisonnable de trouver deux messages qui ont le même condensat (résistance aux collisions) et on ne peut pas à partir du condensat retrouver un message qui a permis d'obtenir cette valeur (résistance au calcul de pré-image).

On prendra l'exemple des fonctions de la famille SHA (« Secure Hash Algorithm »), standardisées par le NIST (« National Institute of Standards and Technology »), en particulier les sous-familles SHA-1 ou SHA-2 (notamment SHA-256).

*Principe*

La présente invention propose, pour une même paire de clés publique/privée, de faire précalculer plusieurs valeurs d'un premier état interne $s_1^i$ chacune pour un nonce $k_i$, puis une implémentation blanchie $WB_i$ d'une opération d'arithmétique modulaire utilisée par l'algorithme de signature pour chacun des nonces $k_i$, ladite opération d'arithmétique modulaire étant en effet fonction du premier état interne $s_1^i$, du nonce $k_i$ et de la clé secrète $x$. On rappelle que par implémentation blanchie, ou « white box implementation », d'une opération, on entend une représentation de l'opération qui ne permette pas de remonter aux états internes ou aux paramètres lorsque l'opération est exécutée (par application de l'implémentation blanchie aux données d'entrée).

Ainsi, un ensemble de couples $\left\{ \left( s_1^i, WB_i \right) \right\}_{i \in [\![0, n-1]\!]}$ du premier état interne $s_1^i$ et de l'implémentation blanchie $WB_i$ de l'opération d'arithmétique modulaire sont prédéfinis et stockés sur les stocké sur les moyens de stockage de données 12a de l'équipement 10a.

En d'autres termes, à clés publique/privée fixée, chaque couple ( $s_1^i$, $WB_i$) est entièrement déterminé par le nonce $k_i$ : tirer un nonce équivaut à tirer un couple. Le nonce $k_i$ n'est donc pas une donnée d'entrée de l'implémentation blanchie $WB_i$ mais bien un paramètre « encapsulé » auquel un attaquant ne peut pas remonter.

De façon préférée, ledit ensemble de couples $\left\{ \left( s_1^i, WB_i \right) \right\}_{i \in [\![0, n-1]\!]}$ est générée par les moyens de traitement de données 11b du serveur 1b et sa transmis pour stockage à l'équipement 10a dans une étape préalable (a0). Cette génération peut comprendre la génération de la pluralité de nonces $\{k_i\}_{i \in [\![0, n-1]\!]}$, puis la génération du couple ( $s_1^i$, $wB_i$) pour chaque nonce $k_i$ de sorte à définir l'ensemble $\left\{ \left( s_1^i, WB_i \right) \right\}_{i \in [\![0, n-1]\!]}$.

Les propriétés attendues du blanchiment d'application font que l'observation de l'exécution de l'implémentation blanchie $WB_i$ ne doit pas permettre de retrouver les valeurs de la clef secrète $x$ et du nonce $k_i$ enfouies dans le calcul. Il suffit donc de n'autoriser l'utilisation de chaque $WB_i$ qu'une seule fois pour empêcher de remonter à $k_i$ et ainsi éviter les restart attack. Le procédé de signature proposé permet donc de résister à un attaquant qui observerait les états intermédiaires (par exemple à l'aide d'une application malveillante tournant sur le mobile).

Les implémentations blanchies $WB_i$ (et donc les couples d'un premier état et d'une implémentation blanchie) sont ainsi supprimés après utilisation pour éviter toute attaque possible.

*Mode de réalisation préféré*

Dans l'exemple où l'algorithme de signature est conforme à DSA, alors $s_1^i$ peut être égal à $(g^{k_i} \bmod p)$ *mod q*, où *g*, *p* et *q* sont des constantes (en particulier des nombres premiers pour *p* et *q*).

Similairement, ladite opération d'arithmétique modulaire représentée par l'implémentation blanchie $WB_i$ peut être $z \mapsto \left(z + s_1^i x\right)k_i^{-1} \bmod q.$ On peut facilement vérifier que ce calcul correspond à celui du $s_2^i$ associé au $s_1^i$ généré précédemment, pour une valeur de condensat z du message.

Les valeurs *p, q, g* sont préférentiellement prédéterminés conformément à l'algorithme DSA, en particulier par les moyens de traitement de données 11b du serveur 10b lors de l'étape préalable (a0).

On rappelle que dans DSA, (*p, q, g, y*) forme une clé publique générée avec une clef privée x de la façon suivante :

- Choisir un nombre premier *p* de longueur *L* telle que $512 \le L \le 1024$, et *L* est divisible par 64
- Choisir un nombre premier *q* de 160 bits, de telle façon que *p* - 1 = *qc,* avec *c* un entier
- Choisir *h,* avec 1 < *h* < *p* - 1 de manière que *g* = *h^c mod p* > 1
- Générer aléatoirement un *x,* avec 0 < *x* < *q*
- Calculer *y* = *g^x mod p*

L'homme du métier comprendra toutefois que le présent procédé n'est pas limité à DSA et apporte satisfaction pour tout algorithme de signature comportant une opération d'arithmétique modulaire fonction d'un premier état interne, d'un nonce et d'une clé secrète.

*Mise en œuvre*

Le présent procédé est mis en œuvre par les moyens de traitement de données 11a de l'équipement 10a et commence par une étape (a) de tirage d'un couple d'un premier état interne $s_1^i$ et d'une implémentation blanchie $WB_i$ d'une opération d'arithmétique modulaire parmi ledit ensemble de couples $\left\{\left(s_1^i, WB_i\right)\right\}_{i\in[\![0,n-1]\!]}$ prédéterminés stocké sur des moyens de stockage de données 12a de l'équipement 10a.

Ce tirage peut être aléatoire ou séquentiel, il revient au tirage d'un nonce $k_i$ puisque chacun couple ( $s_1^i$, $WB_i$) est entièrement déterminé par le nonce $k_i$ à partir duquel il a été généré.

Dans une étape (b) est déterminé un deuxième état interne $s_2^i$ par application à un condensat *H(m)* du document *m* (obtenu par une fonction de hachage donnée, telle que SHA256), de ladite implémentation blanchie $WB_i$ tirée. En d'autres termes, on prend *z = H(m)*.

A partir de là, dans une troisième étape (c) peut être générée la signature électronique du document à partir du premier état interne $s_1^i$ du couple tiré et du deuxième état interne $s_2^i$ déterminé à l'étape (b). Dans l'exemple préféré de DSA, la signature est simplement $\left(s_1^i, s_2^i\right)$.

L'étape (c) comprend également comme expliqué la suppression du couple tiré dudit ensemble de couples $\left\{\left(s_1^i, WB_i\right)\right\}_{i\in[\![0,n-1]\!]}$ (avant ou après la génération de la signature) de sorte à empêcher les restart attack.

Additionnellement, le procédé peut comprendre une étape subséquente (d) d'association par les moyens de traitement de données 11a de l'équipement 10a de la signature électronique au document de sorte à former le document signé. L'équipement 10a peut alors se prévaloir juridiquement de cette signature électronique auprès d'autres entités (serveurs 10c).

*Implémentation blanchie*

La réalisation d'implémentations blanchies d'opérations d'arithmétique modulaire est connue de l'homme du métier.

Toutefois, l'application de l'implémentation blanchie pour exécuter l'opération représentée peut être longue, en particulier si ladite opération d'arithmétique modulaire comprend des exponentiations modulaire.

A ce titre, de façon préférée lesdites implémentations blanchies $WB_i$ utilisent un Système de Représentation Modulaire (« Residue Number System », RNS) pour effectuer ladite opération d'arithmétique modulaire.

Plus précisément, le principe d'implémentation RNS permet de décomposer des calculs modulo une valeur donnée en des calculs modules des petits nombres premiers dont le produit est plus grand que ladite valeur donnée (grâce au théorème chinois).

L'homme du métier pourra procéder par exemple conformément à la demande US2016/239267.

*Produit programme d'ordinateur*

Selon un deuxième et un troisième aspects, l'invention concerne un produit programme d'ordinateur comprenant des instructions de code pour l'exécution (en particulier sur les moyens de traitement de données 11a de l'équipement 10a) d'un procédé selon le premier aspect de l'invention de signature électronique d'un document avec une clé secrète *x* prédéterminée, ainsi que des moyens de stockage lisibles par un équipement informatique (une mémoire 12a de l'équipement 10a) sur lequel on trouve ce produit programme d'ordinateur.

## Revendications

1. Procédé de signature électronique d'un document avec une clé secrète (x) prédéterminée, le procédé étant **caractérisé en ce qu'**il comprend la mise en œuvre par des moyens de traitement de données (11a) d'un équipement (10a) d'étapes de :

   (a) Tirage d'un couple d'un premier état interne $(s_1^i)$ et d'une implémentation blanchie ($WB_i$) d'une opération d'arithmétique modulaire parmi un ensemble de couples $\left(\{(s_1^i, WB_i)\}_{i \in [\![0,n-1]\!]}\right)$ prédéterminés chacun pour un nonce ($k_i$), ledit ensemble de couples $\left(\{(s_1^i, WB_i)\}_{i \in [\![0,n-1]\!]}\right)$ étant stocké sur des moyens de stockage de données (12a) de l'équipement (10a), ledit premier état interne $(s_1^i)$ étant fonction du nonce ($k_i$) et ladite opération d'arithmétique modulaire étant fonction du premier état interne $(s_1^i)$, du nonce ($k_i$) et de la clé secrète (x) ;
   (b) Détermination d'un deuxième état interne $(s_2^i)$ par application à un condensat du document obtenu par une fonction de hachage donnée, de ladite implémentation blanchie ($WB_i$) tirée ;
   (c) génération d'une signature électronique du document à partir du premier état interne $(s_1^i)$ du couple tiré et du deuxième état interne $(s_2^i)$ déterminé, et suppression du couple tiré dudit ensemble de couples $\left(\{(s_1^i, WB_i)\}_{i \in [\![0,n-1]\!]}\right)$.

2. Procédé selon la revendication 1, dans lequel ladite opération d'arithmétique modulaire est $z \longmapsto (z + s_1^i x)k_i^{-1} \bmod q$, où $s_1^i$ est le premier état interne, $k_i$ le nonce, x la clé secrète et q une constante.

3. Procédé selon la revendication 2, dans lequel $s_1^i = (g^{k_i} \bmod p) \bmod q$, où g et p sont des constantes.

4. Procédé selon l'une des revendications 1 à 3, dans lequel la signature est le couple $(s_1^i, s_2^i)$ des premier et deuxième états internes.

5. Procédé selon l'une des revendications 1 à 4, comprenant une étape préalable (a0) de génération dudit ensemble de couples $\left(\{(s_1^i, WB_i)\}_{i \in [\![0,n-1]\!]}\right)$ par des moyens de traitement de données (11b) d'un serveur (1b), et sa transmission à l'équipement (10a).

6. Procédé selon la revendication 5, dans lequel l'étape (a0) comprend la génération d'une pluralité de nonces $(\{k_i\}_{i \in [\![0,n-1]\!]})$, puis la génération du couple ( $s_1^i$, $WB_i$) pour chaque nonce ($k_i$).

7. Procédé selon les revendications 3 et 6 en combinaison, dans lequel l'étape (a0) comprend la génération préalable des constantes p, q, g conformément à l'algorithme DSA.

8. Procédé selon la revendication 7, dans lequel l'étape (a0) comprend également la génération préalable de la clé secrète (x) et d'une clé publique associée en fonction des constantes p, q, g.

9. Procédé selon l'une des revendications 1 à 8, dans lequel lesdites implémentations blanchies ($WB_i$) utilisent un Système de Représentation Modulaire, RNS, pour effectuer ladite opération d'arithmétique modulaire.

10. Procédé selon l'une des revendications 1 à 9, comprenant une étape subséquente (d) d'association par les moyens de traitement de données (11a) de l'équipement (10a) de la signature électronique générée au document de sorte à former le document signé

11. Produit programme d'ordinateur comprenant des instructions de code pour l'exécution d'un procédé selon l'une des revendications 1 à 10 de signature électronique d'un document avec une clé secrète (x) prédéterminée, lorsque ledit programme est exécuté par un ordinateur.

12. Moyen de stockage lisible par un équipement informatique sur lequel un produit programme d'ordinateur comprend des instructions de code pour l'exécution d'un procédé selon l'une des revendications 1 à 10 de de signature électronique d'un document avec une clé secrète (x) prédéterminée.

**Patentansprüche**

1. Verfahren zur elektronischen Unterschrift eines Dokuments mit einem vorbestimmten Geheimschlüssel *(x)*, wobei das Verfahren **dadurch gekennzeichnet ist, dass** es die Umsetzung, durch Datenverarbeitungsmittel (11a) einer Ausrüstung (10a), von Schritten umfasst, zum:

   (a) Ziehen eines Paares eines ersten internen Zustands $(s_1^i)$ und einer gebleichten Implementierung (*WB$_i$*) einer modularen arithmetischen Operation aus einer Reihe von vorbestimmten Paaren $\left( \{ (s_1^i, WB_i) \}_{i \in [\![0, n-1]\!]} \right)$ jeweils für eine Zufallszahl *(k$_i$)*, wobei die Reihe von Paaren $\left( \{ (s_1^i, WB_i) \}_{i \in [\![0, n-1]\!]} \right)$ in Datenspeichermitteln (12a) der Ausrüstung (10a) gespeichert ist, wobei der erste interne Zustand $(s_1^i)$ von der Zufallszahl *(k$_i$)* abhängig ist, und die modulare arithmetische Operation vom ersten internen Zustand $(s_1^i)$, von der Zufallszahl *(k$_i$)* und dem Geheimschlüssel *(x)* abhängig ist;
   (b) Bestimmen eines zweiten internen Zustands $(s_2^i)$ durch Anwenden der gezogenen gebleichten Implementierung (*WB$_i$*) auf ein Kondensat des durch eine gegebene Hash-Funktion erhaltenen Dokuments;
   (c) Erzeugen einer elektronischen Unterschrift des Dokuments ausgehend von dem ersten internen Zustand $(s_1^i)$ des gezogenen Paares und des zweiten bestimmten internen Zustands $(s_2^i)$ und Löschen des gezogenen Paares aus der Reihe von Paaren $\left( \{ (s_1^i, WB_i) \}_{i \in [\![0, n-1]\!]} \right).$

2. Verfahren nach Anspruch 1, wobei die modulare arithmetische Operation
$$z \mapsto \left( z + s_1^i x \right) k_i^{-1} \bmod q$$
lautet, wobei $s_1^i$ der erste interne Zustand ist, *k$_i$* die Zufallszahl ist, *x* der Geheimschlüssel ist, und *q* eine Konstante ist.

3. Verfahren nach Anspruch 2, wobei $s_1^i$ = (*g$^{k_i}$ mod p*) *mod q* ist, wobei *g* und *p* Konstante sind.

4. Verfahren nach einem der Ansprüche 1 bis 3, wobei die Unterschrift das Paar $(s_1^i, s_2^i)$ des ersten und zweiten internen Zustands ist.

5. Verfahren nach einem der Ansprüche 1 bis 4, einen vorbereitenden Schritt (a0) zum Erzeugen der Reihe von Paaren $\left( \{ (s_1^i, WB_i) \}_{i \in [\![0, n-1]\!]} \right)$ durch die Datenverarbeitungsmittel (11b) eines Servers (1b), und deren Übertragung zur Ausrüstung (10a) umfassend.

6. Verfahren nach Anspruch 5, wobei der Schritt (a0) das Erzeugen einer Vielzahl von Zufallszahlen $(\{ k_i \}_{i \in [\![0, n-1]\!]})$ umfasst, gefolgt von der Erzeugung des Paares ( $s_1^i$, *WB$_i$*) für jede Zufallszahl (k$_i$).

7. Verfahren nach den Ansprüchen 3 und 6 in Kombination, wobei der Schritt (a0) das vorherige Erzeugen der Konstanten *p,q,g* entsprechend dem DSA Algorithmus umfasst.

8. Verfahren nach Anspruch 7, wobei der Schritt (a0) ebenfalls das vorherige Erzeugen des Geheimschlüssels *(x)* und eines öffentlichen Schlüssels in Abhängigkeit von den Konstanten *p,q,g* umfasst.

9. Verfahren nach einem der Ansprüche 1 bis 8, wobei die gebleichten Implikationen (*WB$_i$*) ein modulares Darstellungssystem, RNS, zur Durchführung der modularen arithmetischen Operation verwenden.

10. Verfahren nach einem der Ansprüche 1 bis 9, das einen nachfolgenden Schritt (d) zur Zuordnung durch die Datenverarbeitungsmittel (11a) der Ausrüstung (10a) der erzeugten elektronischen Unterschrift zum Dokument derart umfasst, um das unterschriebene Dokument zu bilden.

11. Computerprogrammprodukt, umfassend Codeanweisungen zur Ausführung eines Verfahrens nach einem der Ansprüche 1 bis 10 einer elektronischen Unterschrift eines Dokuments mit einem vorbestimmten Geheimschlüssel *(x)* wenn das Programm von einem Computer ausgeführt wird.

12. Speichermittel, das durch eine Computerausrüstung lesbar ist, in dem ein Computerprogrammprodukt Codeanweisungen zur Ausführung eines Verfahrens nach einem der Ansprüche 1 bis 10 einer elektronischen Unterschrift eines Dokuments mit einem vorbestimmten Geheimschlüssel *(x)* umfasst.

**Claims**

1. Method for electronic signing of a document with a predetermined secret key ($x$), the method being **characterised in that** it comprises the implementation, by data processing means (11a) of equipment (10a), of steps of:

   (a) drawing a pair, formed by a first internal state $(s_1^i)$ and a white-box implementation ($WB_i$) of a modular arithmetic operation, from among a set of predetermined pairs $(\{(s_1^i, WB_i)\}_{i \in [\![0,n-1]\!]})$ each for one nonce ($k_i$), said set of pairs $(\{(s_1^i, WB_i)\}_{i \in [\![0,n-1]\!]})$ being stored on data storage means (12a) of the equipment (10a), said first internal state $(s_1^i)$ being a function of the nonce ($k_i$) and said modular arithmetic operation being a function of the first internal state $(s_1^i)$, of the nonce ($k_i$) and of the secret key ($x$);

   (b) determining a second internal state $(s_2^i)$, by application of said drawn white-box implementation ($WB_i$) to a condensate of the document obtained via a given hash function;

   (c) generating an electronic signature of the document from the first internal state $(s_1^i)$ of the drawn pair and from the second determined internal state $(s_2^i)$, and deleting the drawn pair of said set of pairs $(\{(s_1^i, WB_i)\}_{i \in [\![0,n-1]\!]})$.

2. The method according to claim 1, wherein said modular arithmetic operation is $z \longmapsto (z + s_1^i x)k_i^{-1} \ mod \ q$, where $s_1^i$ is the first internal state, $k_i$ the nonce, x the secret key and $q$ a constant.

3. The method according to claim 2, wherein $s_1^i = (g^{k_i} \ mod \ p) \ mod \ q$, where $g$ and $p$ are constants.

4. The method according to one of claims 1 to 3, wherein the signature is the pair $(s_1^i, s_2^i)$ of the first and second internal states.

5. The method according to one of claims 1 to 4, comprising a prior step (a0) to generate said set of pairs $(\{(s_1^i, WB_i)\}_{i \in [\![0,n-1]\!]})$ by data processing means (11b) of a server (1b), and transmission thereof to the equipment (10a).

6. The method according to claim 5, wherein step (a0) comprises the generation of a plurality of nonces $(\{k_i\}_{i \in [\![0,n-1]\!]})$, followed by the generation of the pair ( $s_1^i$, $WB_i$) for each nonce ($k_i$).

7. The method according to claims 3 and 6 in combination, wherein step (a0) comprises the prior generation of the constants $p, q, g$ conforming to the DSA algorithm.

8. The method according to claim 7, wherein step (a0) also comprises the prior generation of the secret key ($x$) and of an associated public key as a function of the constants $p, q, g$.

9. The method according to one of claims 1 to 8, wherein said white-box implementations ($WB_i$) use a Residue Number System, RNS, to perform said modular arithmetic operation.

10. The method according to one of claims 1 to 9, comprising a subsequent step (d) by the data processing means (11a) of the equipment (10a) to associate the generated electronic signature with the document to form the signed document.

11. Computer program product comprising code instructions to execute a method according to one of claims 1 to 10 for electronic signing of a document with a predetermined secret key ($x$), when said program is executed by a computer.

12. Computer equipment readable storage means on which a computer program product comprises code instructions to execute a method according to one of claims 1 to 10 for electronic signing of a document with a predetermined secret key ($x$).

**FIG. 1**

**RÉFÉRENCES CITÉES DANS LA DESCRIPTION**

**Documents brevets cités dans la description**

- US 2016328543 A

- US 2016239267 A

**Littérature non-brevet citée dans la description**

- **JUNG YEON HWANG et al.** Digital Signature Schemes with Restriction on Signing Capability. *Network and Parallel Computing,* 01 Janvier 2003, vol. 2727, ISSN 0302-9743, ISBN 978-3-642-24784-2, 324-335